# DEMANDE DE BREVET EUROPEEN

(11) **EP 0 999 434 A1**
(43) Date de publication de la demande: **10.05.2000**
(21) Numéro de dépôt: 99402761.3
(22) Date de dépôt: 05.11.1999
(51) Int. Cl.: G01J 9/00

(54) **Détecteur de forme de front d'onde**

(30) Priorité: 05.11.1998 FR 9813940
(71) Demandeur: THOMSON-CSF, 75008 Paris (FR)
(72) Inventeur: Huignard, Jean-Pierre, 94117 Arcueil Cedex (FR); Dirson, Carine, 94117 Arcueil Cedex (FR); Laude, Vincent, 94117 Arcueil Cedex (FR)

(57) **Abrégé**

Ce détecteur de forme de front d'onde comprend :
- un modulateur spatial de lumière (MSL) comprenant une matrice de pixels commandables électriquement et recevant un faisceau optique incident et transmettant une partie de ce faisceau incident;
- un dispositif de focalisation (OBJ) recevant le faisceau incident ou cette partie de faisceau incident et fournissant un faisceau convergent ;
- un dispositif photodétecteur (DET) disposé selon un plan (P) lequel est situé selon le plan de focalisation de la lentille ou à proximité de ce plan de focalisation ;

Un dispositif de commande permet de commander sélectivement lesdits pixels. L'ensemble des détections faites par le dispositif photodétecteur permet de reconstituer la forme du front d'onde du faisceau optique incident.

## Description

L'invention concerne un détecteur de forme de front d'onde.

Un détecteur de forme de front d'onde est un dispositif permettant de mesurer une surface d'onde optique, c'est-à-dire une phase spatiale, à partir de mesures en intensité de l'onde perturbée par des défauts connus. La connaissance du front d'onde est un atout majeur pour, notamment, le contrôle de la qualité des systèmes optiques et des faisceaux laser, mais également pour l'optique adaptative en astronomie et en génération de faisceaux laser de haute qualité (régime dynamique).

Les capteurs de front d'onde peuvent être divisés en deux grandes classes, suivant qu'ils mesurent la dérivée première du front d'onde ou sa dérivée seconde (ou courbure).

### Capteurs de la dérivée première du front d'onde

### Test de Hartmann

Il s'agit d'observer la tache de diffraction d'un petit trou, déplacé dans la section du front d'onde, sur un écran placé dans le plan focal image d'une lentille. Le déplacement transversal de la tache de diffraction est directement proportionnel à la pente du front d'onde dans le trou. Cette méthode, très simple mais non automatique, n'est pas utilisable telle quelle pour un dispositif commercial.

### Shack-Hartmann

II s'agit d'une amélioration du test de Hartmann qui utilise une matrice de micro-lentilles pour échantillonner le front d'onde. Une caméra CCD mesure simultanément les taches de diffraction de chaque sous-pupille. L'acquisition des dérivées du front d'onde est obtenue sur une seule image, mais la dynamique de mesure est limitée par les ambiguïtés provenant de la proximité des différentes tache de diffraction. De plus, la caméra CCD doit être de grande qualité.

### Interféromètre à décalage trilatéral

Ce capteur de front d'onde utilise un élément diffractif générant trois répliques du front d'onde. Les interférences en champ proche de ces trois ondes génèrent un interférogramme dont le traitement conduit aux dérivées du front d'onde. Les limitations de ce type de capteur sont les mêmes que celles du Shack-Hartmann.

### Capteurs de la dérivée seconde du front d'onde

### Test de Foucault

L'idée est similaire au test de Hartmann, mais on observe la tache de diffraction dans deux plans situés de part et d'autre du plan focal image de la lentille d'observation. L'observation des deux figures permet de déduire le sens et l'importance de la courbure locale du front d'onde.

### Senseur de courbure

Il s'agit d'une amélioration du test de Foucault. L'acquisition puis le traitement informatique de deux images de part et d'autre du plan focal image de la lentille d'observation permet l'estimation des courbures locales du front d'onde.

L'objet de l'invention est un capteur de front d'onde bas coût, simple, robuste, de grande précision, achromatique et piloté par ordinateur.

L'invention concerne donc un détecteur de forme de front d'onde comprenant :
- un obturateur recevant un faisceau optique incident et transmettant une partie de ce faisceau incident ;
- un dispositif de focalisation recevant le faisceau incident ou cette partie de faisceau incident et fournissant un faisceau convergent ;
- un dispositif photodétecteur disposé selon un plan lequel est situé selon le plan de focalisation de la lentille ou à proximité de ce plan de focalisation ;
caractérisé en ce que l'obturateur comporte un modulateur spatial de lumière comprenant une matrice de pixels commandables électriquement et un dispositif de commande permettant de commander sélectivement lesdits pixels.

Les différents objets et caractéristiques de l'invention apparaîtront plus clairement dans la description qui va suivre et dans les figures annexées qui représentent :
- la figure 1a, un exemple de réalisation du système de l'invention ;
- la figure 1b, une variante du système de l'invention fonctionnant en réflexion ;
- les figures 2a à 2c, un exemple de commande du modulateur spatial de lumière ;
- la figure 3, un système similaire à celui de la figure 1a dans lequel les photodétecteurs DET sont placés dans un plan P' qui n'est pas le plan focal image ;
- les figures 4a et 4b, des dispositifs photodétecteurs DET ;
- la figure 5, un agencement du système dans lequel le dispositif de focalisation comprend une matrice de lentilles ;
- les figures 6 et 7, des exemples de fonctionnement du système de l'invention.

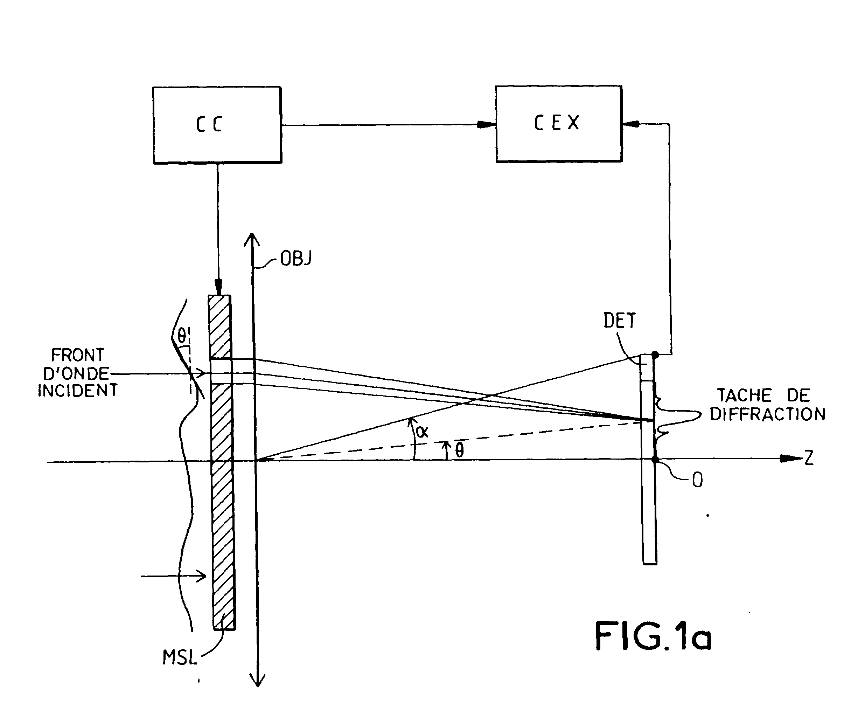

En se reportant à la figure 1a, on va donc décrire un exemple de réalisation du système de l'invention.

Ce système comporte les éléments suivants disposés selon un même axe optique :
- un modulateur spatial de lumière MSL ;
- un objectif ou lentille de focalisation OBJ ;
- un ensemble de photodétecteurs DET ;

On a de plus un circuit de commande CC du modulateur de lumière et un circuit d'exploitation des résultats CEX.

Le front d'onde à analyser est incident sur l'objectif de focalisation OBJ. Le modulateur spatial MSL est situé dans le plan de la pupille de l'objectif. L'ensemble des photodétecteurs est situé dans le plan de focalisation de l'objectif.

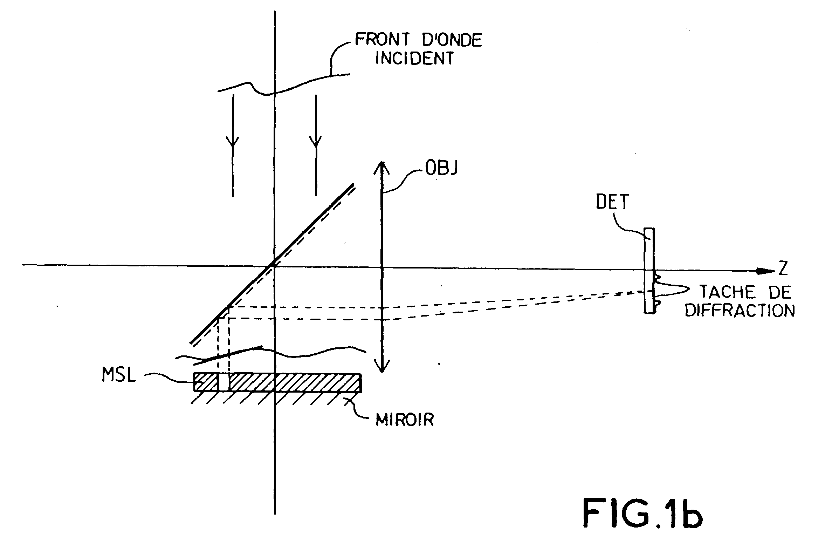

Le modulateur MSL joue le rôle d'un obturateur programmable. Il est avantageusement constitué d'une matrice d'obturateurs optiques commandables individuellement. Ce modulateur peut être un écran à cristal liquide adressable électriquement ou optiquement. Sur la figure 1a, ce modulateur fonctionne en transmission, mais il pourrait également fonctionner en réflexion comme cela est représenté en figure 1b. Dans le cas de la figure 1b, un séparateur de lumière SPL permet d'aiguiller la lumière réfléchie vers l'objectif.

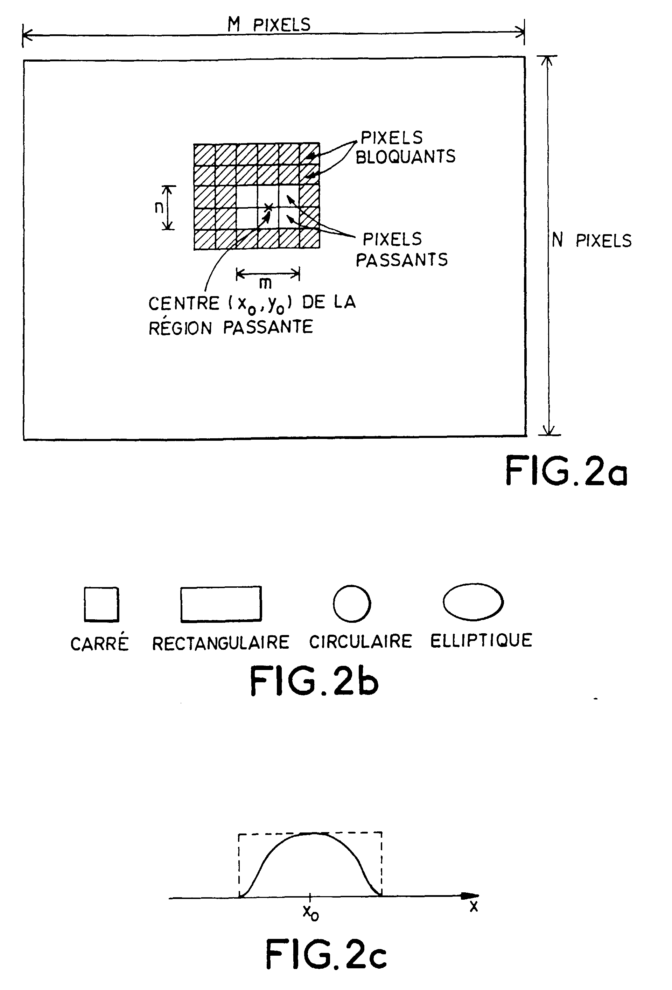

Dans la figure 2a, l'ensemble modulateur et miroir peut être remplacé par une matrice de micro-miroirs commandés individuellement.

Si le modulateur MSL comporte M par N pixels, la commande séquentielle des différents pixels par le circuit CC permet d'explorer un front d'onde incident pixel par pixel. A chaque instant, un pixel laisse passer la lumière, le reste du modulateur est bloquant.

Il est également prévu comme cela est représenté en figure 2a de commander à chaque instant un groupe de pixels. Comme cela est représenté en figure 2b, la région passante du modulateur n'est pas limitée par des formes rectangulaires mais peut prendre une forme quelconque (carrée, ronde, ovale, etc).

De plus, la fonction de transmission d'un pixel ou d'un groupe de pixel n'est pas nécessairement binaire mais peut inclure une fonction d'apodisation (changement de la forme) de la tache de diffraction (figure 2c).

Le circuit de commande rend passant séquentiellement les pixels du modulateur SLM de façon à échantillonner le front d'onde sur toute sa surface en un nombre donné de points, et de mesurer pour chaque échantillon le déplacement de la tache de diffraction au voisinage du plan image de l'objectif OBJ.

A chaque mesure, un pixel ou un groupe de pixels est rendu passant. Le dispositif de photodétecteur DET permet d'indiquer la position du photodétecteur qui a été éclairée avec le maximum d'intensité par la portion du faisceau transmis par le pixel ou le groupe de pixel passant. La position de ce photodétecteur par rapport au point 0 de l'axe optique (figure 1a) permet de mesurer la déviation de la portion de faisceau. Ce résultat de mesure est fourni au circuit d'exploitation des résultats CEX qui reçoit par ailleurs du circuit CC l'identité du pixel ou du groupe de pixels commandé.

Le circuit d'exploitation CEX calcule alors au point mesuré l'inclinaison θ du front d'onde (voir figure 1a). La mesure réalisée est mise en mémoire. Après exploration de toute la section du faisceau, le circuit d'exploitation CEX est capable de reconstituer la forme du front d'onde dans son entier.

La dynamique de mesure est donnée par l'angle de déviation maximal α (figure 1a), puisque la déviation est directement proportionnelle à la pente locale du front d'onde. La dynamique peut ainsi être réglée par le choix de la taille du détecteur et de la longueur focale de l'objectif.

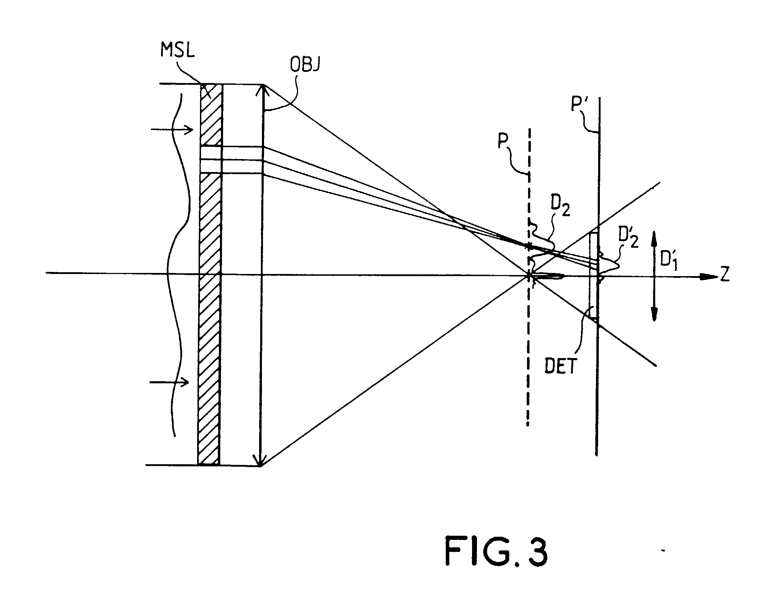

La figure 3 précise le choix de la distance d'observation. Selon le type de modulateur, la partie bloquante de celui-ci peut laisser passer une faible fraction de l'énergie lumineuse incidente. Le point focal 0 reçoit cette énergie qui provient de la surface du MSL toute entière. On a donc, dans le plan focal, une tache de diffraction D₁ concentrée sur l'axe optique 0 et une tache D₂ due au pixel passant. La partie passante due au pixel passant crée une tache de diffraction D₂ peu étendue mais de grande profondeur de champ. Sur la figure 3, on a donc prévu de placer les photodétecteurs dans un plan P' décalé par rapport au plan focal image P. La tâche sur ce plan P due à la lumière de l'ensemble de l'écran a alors une grande dimension D'1 et son énergie est répartie sur toute cette surface. On peut alors détecter aisément la tâche D'2 due au pixel passant.

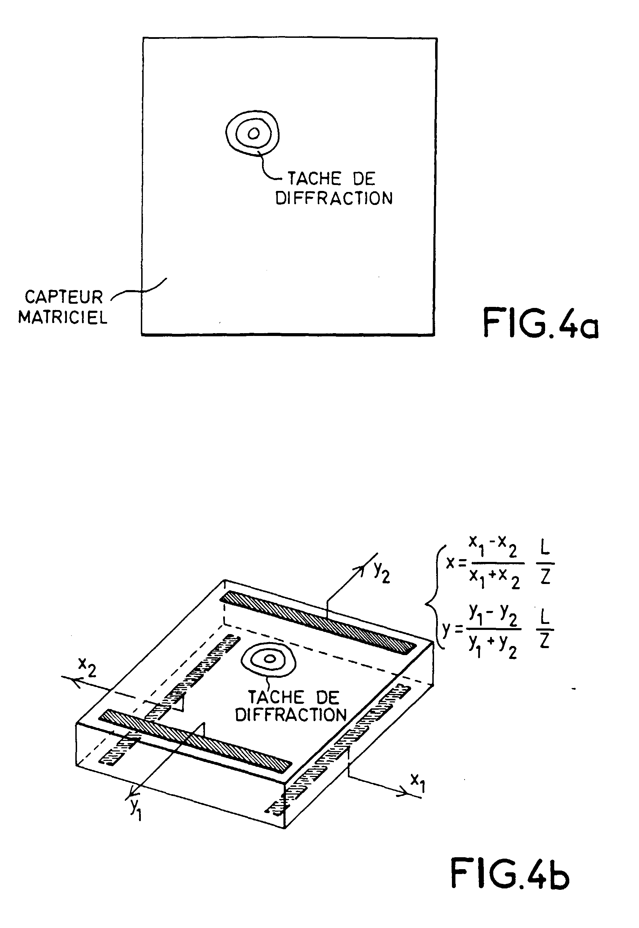

La mesure de la position de la tache de diffraction peut être réalisée soit à l'aide d'une caméra (CCD, Vidicon ou CMOS) reliée à un système informatique d'acquisition d'image (figure 4a), soit grâce à une photodiode captant directement la position de la tache de diffraction (figure 4b). Dans le premier cas, il est nécessaire de calculer la position centrale de la tache de diffraction (centroïde). Dans le second cas, cette information est directement donnée par le capteur. La liste des dérivées mesurées est stockée à mesure du déplacement de la région passante du MSL par le circuit CEX et peut ensuite être utilisée pour retrouver la forme du front d'onde. La photodiode de la figure 4b peut être du type de la photodiode de marque ON-TRACK commercialisée par la Société PHOTONICS Inc. (Californie).

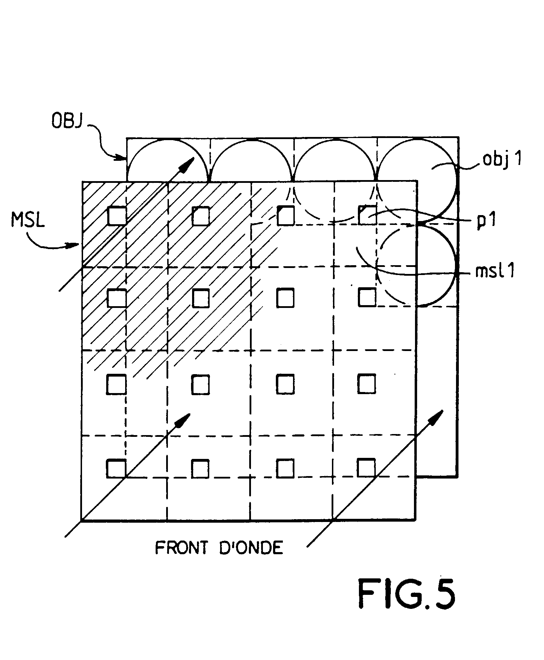

Il est également possible de remplacer l'objectif de focalisation de la figure 1 a par une matrice de micro-lentilles (figure 5). Chacune des micro-lentilles définit une sous-pupille, dans laquelle on « déplace » séquentiellement la région passante du MSL.

A chaque microlentille telle que obj1 est associée une zone msl1 du modulateur. Cette zone msl1 comporte plusieurs pixels : sur la figure 5, un pixel p1 de la zone msl1 est rendu passant. Le modulateur MSL de la figure 5 comporte 4x4 zones telles que msl1 et donc 4x4 micro-lentilles. Le système de l'invention peut prévoir comme cela est représenté en figure 5 de commander, à chaque instant un pixel de même adresse dans chaque zone. Bien que cela ne soit pas représenté, à chaque micro-lentille, est associé un dispositif photodétecteur permettant de mesurer la diffraction d'une portion de faisceau par rapport à l'axe optique de la micro-lentille.

L'avantage de cette disposition est que toutes les sous-pupilles peuvent être balayées simultanément, au détriment de la dynamique qui est diminuée proportionnellement au nombre de micro-lentilles.

A titre d'exemple de réalisation non limitatif, le modulateur MSL est un écran à cristal liquide de 640 par 480 pixels (format VGA), fonctionnant à cadence vidéo (25 Hz). La taille des pixels est de 40 par 40 µm. L'objectif de focalisation est une lentille de focale 500 mm, et le plan d'observation est situé à 20 mm en arrière du plan focal image. Le détecteur utilisé est une caméra CCD (format CCIR) de 640 par 480 pixels.

La déviation maximale mesurable est de 4.8 mrad, et la précision relative de 15 µrad dans chaque direction. 32 par 32 points d'échantillonnage du front d'onde sont utilisés et la partie passante du MSL comporte 20 par 15 pixels (soit 800 par 600 µm). Le circuit CEX peut prendre la forme d'un ordinateur muni d'une carte d'affichage et d'acquisition d'images permettant d'automatiser entièrement le processus. Le temps complet de traitement peut être de 4 minutes (soit 0.3 secondes par échantillon). Il pourrait être réduit d'un facteur 100 en utilisant un MSL à cristaux liquides ferro-électriques et une photodiode captant directement la position de la tache de diffraction.

A titre d'exemple, l'invention peut être appliquée dans les domaines suivants :

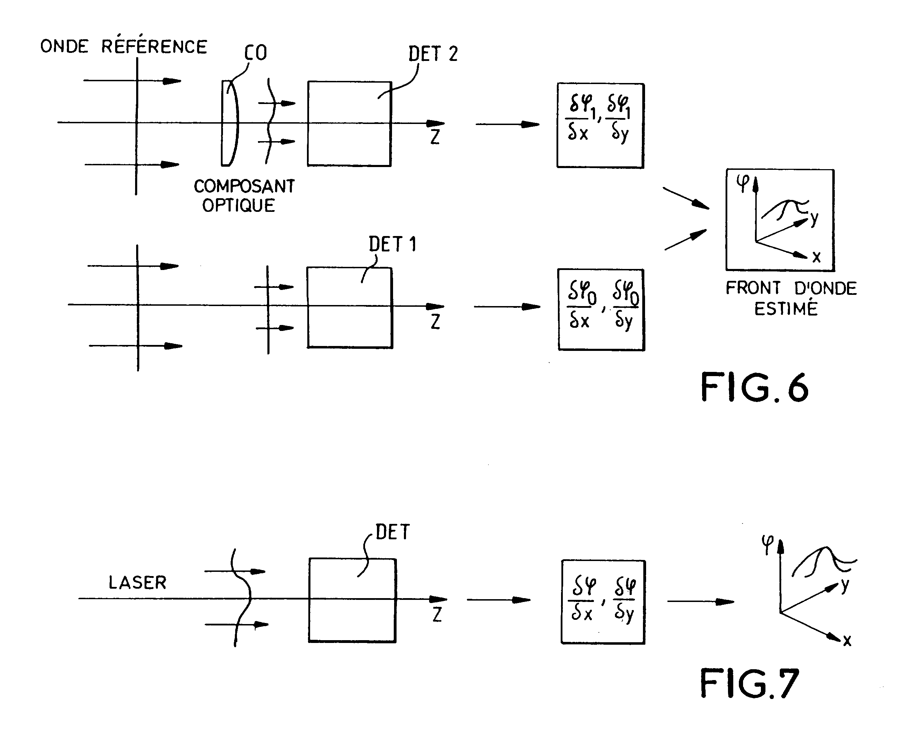

- Test de composants optiques: le dispositif permet de mesurer précisément la déformation de la surface d'onde qu'introduit un composant optique CO quelconque (utilisé en réflexion ou en transmission, de révolution ou non ...). Pour cela, le système de la figure 6 comporte un détecteur de front d'onde DET qui mesure la surface d'onde d'éclairage seule puis la surface de front d'onde en présence du composant 0 à mesurer ; la soustraction de ces deux mesures d'onde donne le résultat désiré (figure 6), à savoir la déformation de la surface du front d'onde introduite par le composant 0.

- Analyse de la phase spatiale des faisceaux laser : le dispositif est utilisable à la fois en régime continu ou impulsionnel. Une source d'éclairage annexe n'est plus nécessaire dans ce cas (figure 7).

Enfin, deux améliorations visant à simplifier l'usage du capteur de front d'onde en pratique sont :
- l'adjonction d'un télescope en entrée du système pour adapter la taille du faisceau à celle de la pupille ;
- l'emploi d'un objectif ou de micro-lentilles à focale variable afin d'adapter la dynamique de mesure au front d'onde à mesurer.

Le dispositif de l'invention présente les avantages suivants :
- Le dispositif est achromatique si l'objectif est corrigé des aberrations chromatiques .
- Le dispositif ne nécessite pas d'alignements critiques (inévitables avec les micro-lentilles par exemple). Pour le calibrer il suffit de l'utiliser avec une onde plane de référence.
- Le dispositif ne demande pas de capteur de haute qualité ou à faible bruit, du fait que toute la surface du détecteur est utilisée pour chaque point d'échantillonnage.
- La précision d'estimation est excellente puisque toute la surface du détecteur est utilisée.
- Aucune ambiguïté n'est possible puisque l'acquisition est séquentielle.
- Le traitement pour retrouver les valeurs des dérivées locales est extrêmement simple puisqu'il suffit de trouver le centre de la tache de diffraction.
- Le dispositif n'est composé que d'éléments optiques standards, donc relativement peu onéreux.
- L'estimation de fronts d'onde variant dans le champ objet (issus d'une source étendue) est non-ambigüe.

## Revendications

1. Détecteur de forme de front d'onde comprenant :
- un obturateur recevant un faisceau optique incident et transmettant une partie de ce faisceau incident ;
- un dispositif de focalisation (OBJ) recevant le faisceau incident ou cette partie de faisceau incident et fournissant un faisceau convergent ;
- un dispositif photodétecteur (DET) disposé selon un plan (P) lequel est situé selon le plan de focalisation de la lentille ou à proximité de ce plan de focalisation ;
caractérisé en ce que l'obturateur comporte un modulateur spatial de lumière (MSL) comprenant une matrice de pixels commandables électriquement et un dispositif de commande permettant de commander sélectivement lesdits pixels.

2. Détecteur selon la revendication 1, caractérisé en ce que le dispositif de photodétecteurs (DET) est une matrice de photodétecteurs, le centre de la matrice étant situé selon l'axe optique du dispositif de focalisation.

3. Détecteur selon la revendication 2, caractérisé en ce qu'il comporte un circuit électrique identifiant la position du ou des photodétecteurs recevant une portion du faisceau incident et traduisant cette position en valeur de pente du front d'onde de ladite portion de faisceau incident.

4. Détecteur selon la revendication 1, caractérisé en ce que le dispositif commande le modulateur spatial de lumière, pixel par pixel ou groupe de pixels par groupe de pixels.

5. Détecteur selon la revendication 1, caractérisé en ce que le dispositif photodétecteur est un photodétecteur du type détecteur de position.

6. Détecteur selon la revendication 1, caractérisé en ce que le dispositif de focalisation comporte plusieurs lentilles situées dans un même plan, chaque lentille étant associée à plusieurs pixels du modulateur spatial de lumière et étant capable de recevoir les différentes portions de faisceau issues de pixels.

7. Détecteur selon la revendication 1, caractérisé en ce que le modulateur spatial (MSL) est situé selon un plan de pupille du dispositif de focalisation.
